# FASCICULE DE BREVET EUROPEEN

(11) **EP 1 346 525 B1**
(45) Date de publication et mention de la délivrance du brevet: **07.05.2008**
(21) Numéro de dépôt: 00993934.9
(22) Date de dépôt: 26.12.2000
(51) Int. Cl.: H04L 12/40, B60R 16/02

(54) **DISPOSITIF ET PROCEDE DE FILTRAGE DES MESSAGES DANS UN SYSTEME DE COMMUNICATION DE TYPE SERIE**
EINRICHTUNG UND VERFAHREN ZUM FILTERN VON NACHRICHTEN IN EINEM KOMMUNIKATIONSSYSTEM DES SERIELLEN TYPS
DEVICE AND METHOD FOR FILTERING MESSAGES IN A SERIES-TYPE COMMUNICATION SYSTEM

(43) Date de publication de la demande: 24.09.2003
(73) Titulaire: STMicroelectronics SA, 92120 Montrouge (FR)
(72) Inventeur: KINOWSKI, Paul, F-13100 Aix-en-Provence (FR); MAITREJEAN, Christophe, F-39300 Cize (FR)
(74) Mandataire: Bentz, Jean-Paul
(86) Numéro de dépôt international: PCT/FR2000/003687
(87) Numéro de publication internationale: WO 2002/052796

(56) Documents cités:
- US-A- 5 619 652
- US-A- 6 078 733
- "XA-C3; XA 16-bit microcontroller family 32K/1024 OTP/ROM CAN transport layer controller 1 UART, 1 SPI Port, CAN 2.0B," PHILIPS DATASHEET (PRELIMINARY SPECIFICATION), [en ligne] 25 janvier 2000 (2000-01-25), XP002166365 Extrait de l'Internet: <URL:http://www.semiconductors.philips.com /acrobat/datasheets/XA-C3_5.pdf> [extrait le 2001-04-23]
- "P8XC591; Single-chip 8-bit microcontroller with CAN controller" PHILIPS DATASHEET (PRELIMINARY SPECIFICATION), [en ligne] 26 juillet 2000 (2000-07-26), pages 1,24-27,58, XP002166366 Extrait de l'Internet: <URL:http://www.semiconductors.philips.com /acrobat/datasheets/P8XC591_2.pdf> [extrait le 2001-04-23]

## Description

L'invention concerne les systèmes de communication de type série entre les différents éléments d'un réseau et, plus particulièrement dans de tels systèmes, un dispositif et un procédé pour filtrer, dans chaque élément du réseau, les messages transmis sur le réseau afin de ne retenir que ceux qui sont relatifs à l'élément concerné.

Un exemple d'application de tels systèmes de communication de type série est le véhicule automobile dans lequel il est prévue d'utiliser plusieurs réseaux affectés chacun à un des sous-ensembles différents du véhicule tels que le moteur, l'habitacle, l'éclairage, le diagnostic, etc.

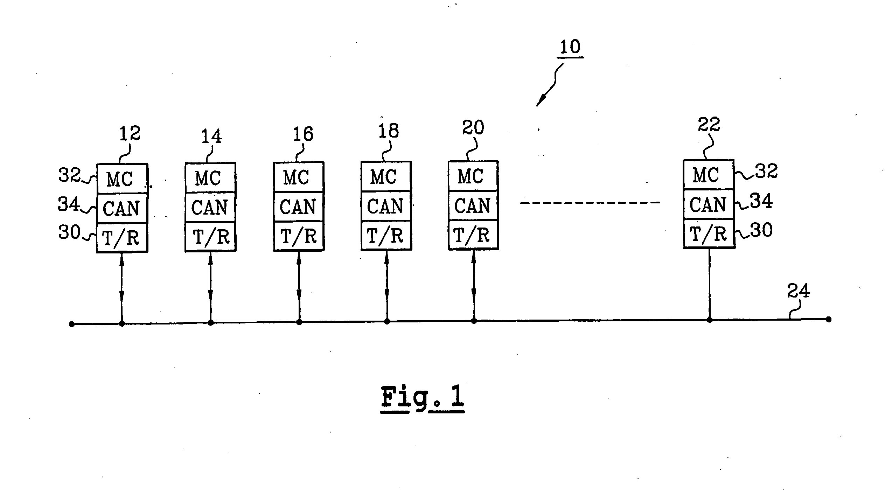

Dans chaque sous-ensemble, par exemple l'habitacle 10 (figure 1), les éléments ou noeuds, tels que l'ordinateur central 12 du sous-ensemble, une porte 14, le toit ouvrant 16, le thermomètre habitacle 18, un siège 20, l'appareil de climatisation 22 sont connectés entre eux par un câble 24 à plusieurs conducteurs sur lequel sont transmis des messages fournis par les différents éléments ou noeuds à destination de tous les noeuds à destination de tous les noeuds du réseau.

Cependant, contrairement aux réseaux de communication série fixes, c'est-à-dire, non embarqués sur le véhicule automobile, par exemple, les réseaux de type FDDI (en anglais Fiber Distributed Data Interface) comme ceux décrits dans le brevet US 5 619 652, reliant des ordinateurs et des stations de travail, et dont le protocole FDDI est basé sur un adressage classique de type « source/destination », le message transmis via les réseaux de communication série embarqués sur le véhicule automobile n'indique pas l'identité du destinataire mais le type ou contenu du message, par exemple la température de l'habitacle, par un code identificateur. Le message comprend, en outre, la donnée correspondante, par exemple la valeur de la température de l'habitacle.

Il en résulte que chaque noeud du réseau reçoit tous les messages transmis sur le câble et doit alors effectuer un tri pour ne retenir que ceux qui présentent de l'intérêt, c'est-à-dire ceux qui sont nécessaires à son fonctionnement.

A cet effet, chaque élément ou noeud 12 à 22 comprend :
- un émetteur/récepteur 30 (ou T/R) qui est connecté au câble ou bus série 24,
- un microcontrôleur 32 (ou MC) qui gère les différentes fonctions du noeud concerné, et
- un contrôleur de réseau 34 (ou CAN) qui réalise l'interface entre l'émetteur/récepteur 30 et le microcontrôleur 32 de manière à ne présenter au microcontrôleur 32 que les messages qui le concernent.

Il existe deux principaux types de contrôleur de réseau, l'un appelé « Full CAN », et l'autre appelé « Basic CAN ».

Dans le contrôleur « Full CAN », comme, par exemple, celui décrit dans « XA-C3 1 XA 16-bit microcontroller family 32K/1024 OTP/ROM CAN tran5port layer controller 1 UART, 1 SPI Port, CAN 2.OB », Philips Datasheet (Preliminary specification), 25 janvier 2000, extrait de l'Internet URL :http://www.semiconductors.philips.com/acrobat/datash eets/XA-C3 5.pdf>, il y a autant .de mémoires tampon, appelées « Boîte aux lettres », que de types de messages susceptibles d'être traités par le microcontrôleur 32.

Chaque boîte aux lettres est affectée à un type de message et le microcontrôleur connaît cette affectation de sorte qu'il peut transférer le message dans sa mémoire dès qu'il en a besoin.

Dans le contrôleur « Basic CAN », le nombre de boîtes aux lettres est inférieur au nombre qui serait nécessaire avec un contrôleur « Full CAN ». En fait, ces boîtes aux lettres sont réalisées sous la forme d'une mémoire tampon du type « FIFO » (correspondant à l'expression anglo-saxonne « First In-First Out »), comme le décrit, par exemple, « P8XC591 ; Single-chip 8-bit microcontroller with CAN controller » Philips Datasheet (Preliminary Specification), 26 juillet 2000, pages 1, 24-27, 58, extrait dé l'Internet URL :http://www.semiconductors.philips.com/acrobat/datash eets/P8XC591 2.pdf>. Avec une telle mémoire, le microcontrôleur ne connaît pas l'identification des messages qui y sont contenus car il n' y a pas d'affectation d'une partie de la mémoire tampon à chaque type de message.

En conséquence, le microcontrôleur doit effectuer sous forme logicielle certaines opérations pour identifier les messages reçus en comparant le code identificateur ou identifiant du message à une liste d'identifiants des messages susceptibles d'être traités par microcontrôleur. En cas de comparaison positive, un index correspondant à cet identifiant indique l'adresse de la mémoire du microcontrôleur dans laquelle ce message doit être enregistré pour traitement.

Le contrôleur "Basic CAN" présente l'inconvénient majeur de faire souvent intervenir le microcontrôleur, c'est-à-dire de l'interrompre dans ses tâches relatives à l'application concernée, ce qui nuit à son efficacité.

Par contre, le contrôleur "Full CAN" réduit au minimum les interruptions du microcontrôleur mais il nécessite l'utilisation d'un nombre de boites aux lettres qui est d'autant plus élevé que le nombre de types de messages est grand. Il en résulte une augmentation de la surface de silicium consacrée aux boîtes aux lettres au détriment des autres circuits. En outré, par suite de l'évolution des applications, le nombre de boîtes aux lettres devient insuffisant pour traiter de nouveaux types de messages, sauf à développer un nouveau contrôleur avec un nombre suffisant de boites aux lettres, ce qui est coûteux.

Un but de la présente invention est de réaliser un dispositif et de mettre en oeuvre un procédé, dans chaque noeud d'un réseau de communication de type série dans lequel tous les messages transmis sont reçus par tous les noeuds, pour filtrer vers le microcontrôleur de chaque noeud les messages qui lui sont destinés en permettant une adaptation aisée à un nombre quelconque de messages à filtrer sans modification sensible de la taille des mémoires et sans augmentation importante du nombre des interruptions du microcontrôleur.

L'invention concerne un dispositif de filtrage des messages reçus dans un noeud d'un réseau de communication de type série dans lequel les messages sont transmis à tous les noeuds du réseau et comportent chacun un code identificateur indiquant le contenu du message, le dispositif de filtrage comprenant :
- des moyens pour associer un index à chaque code identificateur d'une liste de codes identificateurs correspondant à des messages susceptibles d'être traités par le microcontrôleur du noeud, lesdits moyens comprenant une mémoire contenant, d'une part, les codes identificateurs de ladite liste et, d'autre part, un index pour chaque code identificateur de ladite liste,
- des moyens pour associer au message reçu un index sélectionné comme étant celui qui, dans ladite mémoire, est associé au code identificateur auquel correspond le code identificateur du message reçu,
- des moyens pour enregistrer dans une mémoire de type FIFO le message reçu et son index associé,
- des moyens pour associer à chaque index une adresse dans une mémoire du microcontrôleur de manière à enregistrer chaque message reçu à une adresse déterminée de ladite mémoire du microcontrôleur,
caractérisé en ce que la mémoire contenant les codes identificateurs de ladite liste et les index correspondants est une mémoire programmable.

Dans un mode de réalisation, les moyens pour associer au message reçu un index sélectionné comme étant celui qui, dans ladite mémoire, est associé au code identificateur auquel correspond le code identificateur du message reçu, comprennent :
- un comparateur pour comparer le code identificateur de chaque message à chacun des codes identificateurs de la liste contenus dans la mémoire et fournir un signal en cas d'égalité,
- un circuit de transfert, commandé par ledit signal d'égalité, pour associer au message reçu l'index correspondant au code identificateur reconnu.

Dans un autre mode de réalisation, les moyens pour associer à chaque index une adresse dans une mémoire du microcontrôleur comprennent une mémoire programmable qui est adressable par l'index.

L'invention concerne également un procédé de filtrage des messages reçus dans un noeud d'un réseau de communication de type série dans lequel les messages sont transmis à tous les noeuds du réseau et comportent chacun un code identificateur indiquant le contenu du message, le procédé de filtrage comprenant les étapes suivantes consistant à :
a) établir une liste des codes identificateurs correspondant aux messages susceptibles d'être traités par le microcontrôleur du noeud,
b) affecter à chaque code identificateur de la liste un index,
c) associer à chaque message présentant un code identificateur de la liste l'index qui lui a été affecté,
d) enregistrer dans une mémoire de type EIFO chaque message reçu et son index associé,
e) associer à chaque index une adresse dans une mémoire du microcontrôleur, et
f) enregistrer chaque message dans la mémoire du microcontrôleur à l'adresse pointée par l'index contenu dans le message,
- caractérisé en ce qu'il comprend une étape suivante consistant à :
g) enregistrer les codes identificateurs de la liste et les index correspondants dans une mémoire programmable.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma d'un système ou réseau de communication de type série connectant une pluralité d'éléments ou noeuds auxquels s'applique l'invention, et
- la figure 2 est un schéma fonctionnel simplifié d'un dispositif de filtrage des messages selon l'invention, schéma qui illustre également le procédé selon l'invention.

La figure 1, déjà décrite dans le préambule, est un schéma montrant un système ou réseau de communication de type série dans lequel un câble 24 connecte entre eux un certain nombre d'éléments ou noeuds 12 à 22 de manière à les faire communiquer par des messages binaires de type série qui sont tous reçus par chacun des éléments.

Chaque élément 12 à 22 ou noeud comprend :
- un émetteur/récepteur 30 (ou T/R) qui émet et reçoit sur le câble 24 des messages binaires série,
- un microcontrôleur 32 (ou MC) qui réalise les fonctions qui sont assignées à l'élément ou noeud considéré en utilisant, notamment, certains des messages binaires série reçus par l'émetteur/récepteur 30, et
- un contrôleur de réseau 34 (ou CAN) qui réalise l'interface bi-directionnelle entre l'émetteur/récepteur 30 et le microcontrôleur 32 en fournissant à l'émetteur/récepteur les messages binaires à transmettre sur le câble 24 et en ne présentant au microcontrôleur que les messages binaires qui lui sont destinés.

Plus précisément, le contrôleur de réseau 34 comprend deux parties, la première pour analyser et mettre en forme les signaux fournis par l'émetteur/récepteur 30 selon le protocole et le deuxième pour filtrer les messages mis en forme par la première partie et les présenter au microcontrôleur.

L'invention concerne cette deuxième partie en proposant un nouveau dispositif et un nouveau procédé pour filtrer les messages binaires reçus et les présenter au microcontrôleur du noeud.

Ce nouveau dispositif et ce nouveau procédé font appel à des circuits et des fonctions existants mais en les complétant par des circuits et opérations complémentaires.

Le dispositif et le procédé selon l'invention sont mis en oeuvre dans le cadre d'un contrôleur de réseau de type "Basic CAN", c'est-à-dire dans lequel les messages retenus après filtrage sont enregistrés dans une mémoire tampon de type "FIFO".

Selon l'invention, à chaque message retenu après filtrage est associé un numéro FMI ou index qui définit le type de message parmi les N types de messages susceptibles d'être traités par le microcontrôleur du noeud. Le message retenu et le numéro FMI sont enregistrés dans la mémoire FIFO.

Lorsque ce message est transféré au microcontrôleur, le numéro FMI est utilisé pour interroger une table qui indique l'adresse dans la mémoire volatile où doit être enregistré ce type de message.

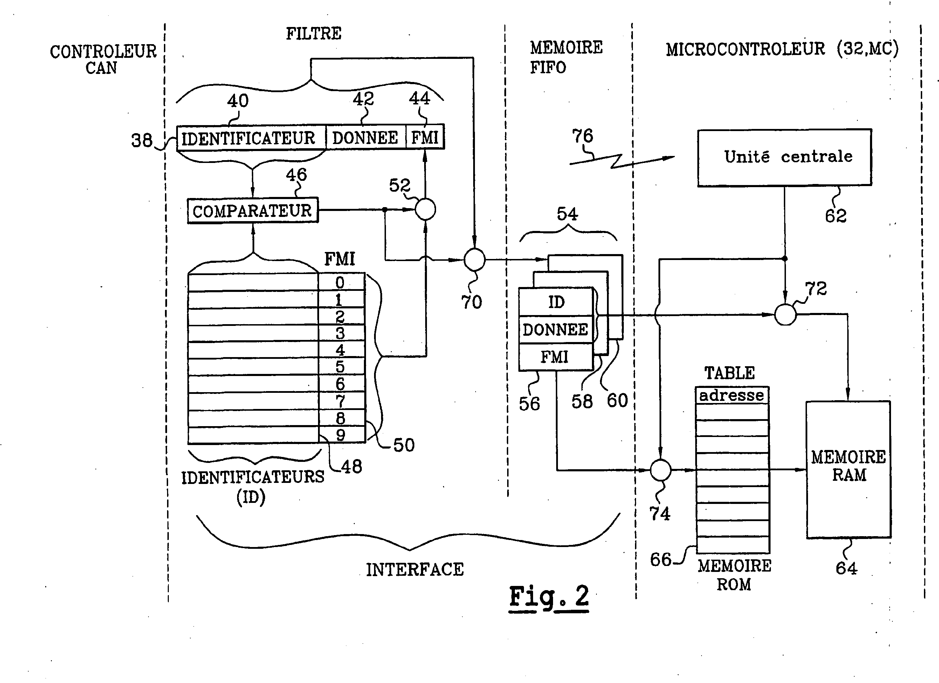

La figure 2 est un schéma montrant les circuits, anciens et nouveaux, ainsi que les opérations, anciennes et nouvelles, à mettre en oeuvre pour réaliser l'invention.

Le filtrage des messages est obtenu en comparant dans un comparateur 46 le code identificateur 40 (ID) du message reçu à une liste d'identificateurs correspondant à des messages susceptibles d'être traités par le microcontrôleur du noeud. Le message reçu est enregistré dans un registre 38 et la liste des identificateurs est enregistrée, par exemple, dans une série de registres 48.

Selon l'invention, à chaque identificateur de la liste est associé un numéro FMI ou index, par exemple de 0 à 9 sur le schéma, ces numéros étant enregistrés dans une série de registres 50. FMI est l'acronyme de l'expression anglo-saxonne « Filter Match Index ».

I1 est à noter que le numéro FMI peut être calculé selon un processus connu par ailleurs de manière à obtenir des numéros consécutifs.

Lorsque la comparaison est positive, le numéro FMI correspondant est transféré dans la partie 44 du registre 38 via des portes électroniques 52 dont l'ouverture est commandée par le comparateur 46. Ce signal d'ouverture commande aussi l'ouverture de portes électroniques 70 de manière à transférer le message reçu et son numéro FMI associé dans une mémoire 54 de type FIFO.

Bien entendu, le numéro FMI peut être transféré directement dans la mémoire tampon 54 sans passer par le registre 38, auquel cas les portes électroniques 52 sont disposées en parallèle aux portes électroniques 70 de transfert de l'identificateur 40 et de la donnée 42. La mémoire FIFO comprend par exemple trois plans de mémoire 56, 58 et 60 qui permettent chacun d'enregistrer un message reçu. Le message reçu est d'abord enregistré dans le plan mémoire 60 puis est transféré successivement aux plans 58 et 56.

Le transfert du plan mémoire 56 vers le microcontrôleur 32(MC) est effectué selon un processus d'interruption classique 76. Ce transfert est effectué par l'unité centrale 62 du microcontrôleur à l'aide d'un signal qui ouvre des portes électroniques 72 pour l'identificateur et la donnée et des portes électroniques 74 pour l'index FMI.

Dans le microcontrôleur 32(MC), une table de correspondance 66 du type mémoire ROM permet d'associer, à chaque numéro FMI, une adresse dans une mémoire 64 du type RAM dans laquelle doit être enregistré le message reçu.

Par exemple, l'adresse fournie par cette table est celle où doit être enregistré le premier octet du message. Pour le numéro FMI suivant, l'adresse fournie sera celle qui suit l'adresse du dernier octet du message correspondant au numéro FMI précédent.

Ceci provient du fait qu'à chaque identificateur correspond une longueur de message bien déterminée, par exemple un nombre d'octets déterminé.

Le dispositif de filtrage selon l'invention comprend :
- des moyens 50 pour associer un numéro FMI ou index FMI à chaque code identificateur ID d'une liste 48 de codes identificateurs correspondant à des messages susceptibles d'être traités par le microcontrôleur 32, MC,
- des moyens 44, 52 pour associer à chaque message correspondant à un code identificateur de la liste l'index FMI associé à ce code identificateur,
- des moyens 70 pour enregistrer dans une mémoire 54 de type FIFO le message reçu et son index FMI associé, et
- des moyens 66 pour associer à chaque index FMI une adresse dans la mémoire 64 de manière à enregistrer chaque message reçu à une adresse déterminée de la mémoire 64.

Le dispositif décrit ci-dessus en relation avec la figure 2 et son mode de fonctionnement permettent de définir un procédé de filtrage selon l'invention qui comprend les étapes suivantes consistant à :
(a) établir une liste 48 des codes identificateurs ID correspondant aux messages susceptibles d'être traités par le microcontrôleur 32(MC),
(b) affecter (55) à chaque code identificateur ID de la liste un index FMI,
(c) associer (44) à chaque message présentant un code identificateur de la liste l'index FMI qui lui a été affecté,
(d) associer (66) à chaque index FMI une adresse dans la mémoire 64, et
(e) enregistrer chaque message dans la mémoire 64 à l'adresse pointée par l'index FMI.

Les mémoires 48 et 50 ont été décrites comme des registres mais elles peuvent être réalisées sous forme de mémoires programmables et effaçables, par exemple du type EEPROM (acronyme pour l'expression anglo-saxonne "Electrically Erasable and Programmable Read Only

Memory"). Le nombre de registres ou la taille de la mémoire 48, 50 est prévu pour enregistrer un nombre aussi grand que possible de codes identificateurs et de leur index associé afin de s'adapter aux évolutions des applications de chaque noeud en termes de nombre de codes identificateurs.

Parallèlement, la table 66 peut aussi être réalisée par des registres mais de préférence par une mémoire EEPROM dont la taille devra être prévue selon les mêmes critères que pour les mémoires 48, 50. L'utilisation de mémoires de type EEPROM permet une adaptation aisée de l'interface aux besoins immédiats de chaque noeud du réseau mais aussi aux besoins à venir qui résultent de l'évolution de chaque noeud en termes de messages à traiter.

## Revendications

1. Dispositif de filtrage vers un .microcontrôleur (32, MC) des messages reçus dans un noeud d'un réseau de communication de type série dans lequel les messages sont transmis à tous les noeuds du réseau et comportent chacun un code identificateur indiquant le contenu du message, le dispositif de filtrage comprenant :
- des moyens (50) pour associer un index (FMI) à chaque code identificateur (ID) d'une liste (48) de codes identificateurs correspondant à des messages susceptibles d'être traités par le microcontrôleur (32, MC), lesdits moyens (50) comprenant une mémoire (48, 50) contenant, d'une part, les codes identificateurs de ladite liste et, d'autre part, un index (FMI) pour chaque code identificateur de ladite liste,
- des moyens (44, 46, 52) pour associer au message reçu un index (FMI) sélectionné comme étant celui qui, dans ladite mémoire (48, 50), est associé au code identificateur (ID) auquel correspond le code identificateur du message reçu,
- des moyens (70) pour enregistrer dans une mémoire (54) de type FIFO le message reçu et son index (FMI) associé,
- des moyens (66) pour associer à chaque index (FMI) une adresse dans une mémoire (64) du microcontrôleur (32, MC) de manière à enregistrer chaque message reçu à une adresse déterminée de ladite mémoire (64) du microcontrôleur (32, MC),
**caractérisé en ce que** la mémoire contenant les codes identificateurs (ID) de ladite liste et les index (FMI) correspondants est une mémoire programmable.

2. Dispositif selon la revendication 1,
**caractérisé en ce que** les moyens (44, 46, 52) pour associer au message reçu un index (FMI) sélectionné comme étant celui qui, dans ladite mémoire (48, 50), est associé au code identificateur (ID) auquel correspond le code identificateur du message reçu, comprennent :
- un comparateur (46) pour comparer le code identificateur de chaque message à chacun des codes identificateurs de la liste contenus dans la mémoire (48) et fournir un signal en cas d'égalité,
- un circuit de transfert (52), commandé par ledit signal d'égalité, pour associer au message reçu l'index (FMI) correspondant au code identificateur reconnu.

3. Dispositif selon la revendication 1 ou 2, **caractérisé en ce que** les moyens pour associer à chaque index (FMI) une adresse dans une mémoire du microcontrôleur (32, MC) comprennent une mémoire programmable (66) qui est adressable par l'index (FMI).

4. Procédé de filtrage vers un microcontrôleur (32, MC) des messages reçus dans un noeud d'un réseau de communication de type série dans lequel les messages sont transmis à tous les noeuds du réseau et comportent chacun un code identificateur indiquant le contenu du message, le procédé de filtrage comprenant les étapes suivantes consistant à :
a) établir une liste (48) des codes identificateurs (ID) correspondant aux messages susceptibles d'être traités par le microcontrôleur (32, MC),
b) affecter (55) à chaque code identificateur (ID) de la liste un index (FMI),
c) associer (44) à chaque message présentant un code identificateur de la liste l'index (FMI) qui lui a été affecté,
d) enregistrer dans une mémoire (54) de type FIFO chaque message reçu et son index (FMI) associé,
e) associer (66) à chaque index (FMI) une adresse dans une mémoire (64) du microcontrôleur (32, MC), et
f) enregistrer chaque message dans la mémoire (64) du microcontrôleur (32, MC) à l'adresse pointée par l'index (FMI) contenue dans le message,
**caractérisé en ce qu'**il comprend une étape suivante consistant à :
g) enregistrer les codes identificateurs (ID) de la liste (48) et les index (FMI) correspondants dans une mémoire programmable.

## Claims

1. Device for filtering to a microcontroller (32, MC) messages received in a node of a serial type communications network in which the messages are sent to all the nodes of the network and each comprise an identifier code indicating the content of the message, the filtering device comprising :
- means (50) for associating an index (FMI) to each identifier code (ID) from a list (48) of identifier codes corresponding to messages susceptible of being processed by the microcontroller (32, MC), said means (50) comprising a memory (48, 50) containing on the one hand the identifier codes of said list and on the other hand an index (FMI) for each identifier code of said list,
- means (44, 46, 52) for associating to the received message an index (FMI) selected as being that one which in said memory (48, 50) is associated to the identifier code (ID) to which corresponds the identifier code of the received message,
- means (70) for storing in a FIFO type memory (54) the message received and its associated index (FMI), and
- means (66) for associating to each index (FMI) an address in a memory (64) so as to store each message received at a determined address of said memory (64) of the microcontroller (32, MC),
**characterized in that** the memory containing the identifier codes (ID) of said list and the corresponding indexes (FMI) is a programmable memory.

2. Device according to claim 1, **characterized in that** the means (44, 46, 52) for associating to the received message an index (FMI) selected as being that one which in said memory (48, 50) is associated to the identifier code (ID) to which corresponds the identifier code of the received message, comprise:
- a comparator (46) for comparing the identifier code of each message with each one of the identifier codes of the list contained in the memory (48) and providing a signal when there is match,
- a transfer circuit (52) controlled by said match signal for associating to the received message the index (FMI) corresponding to the recognized identifier code.

3. Device according to claim 1 or 2, **characterized in that** the means for associating to each index (FMI) an address in a memory of the microcontroller (32, MC) comprise a programmable memory (66) which is addressable by the index (FMI).

4. Method of filtering to a microcontroller (32, MC) messages received in a node of a serial type communications network in which the messages are sent to all the nodes of the network and each comprise an identifier code indicating the content of the message, the filtering method comprising the following steps consisting of:
a) establishing a list (48) of the identifier codes (ID) corresponding to the messages susceptible of being processed by the microcontroller (32, MC),
b) allocating (55) to each identifier code (ID) of the list an index (FMI),
c) associating (44), to each message presenting an identifier code of the list, the index (FMI) which has been allocated thereto,
d) recording in a FIFO type memory (54) each received message and its associated index (FMI),
e) associating (66) to each index (FMI) an address in a memory (64) of the microcontroller (32, MC), and
f) storing each message in the memory (64) of the microcontroller (32, MC) at the address pointed by the index (FMI) contained in the message,
**characterized in that** it comprises a following step consisting of:
g) recording the identifier codes (ID) of the list (48) and the corresponding indexes (FMI) in a programmable memory.

## Patentansprüche

1. Vorrichtung zum Filtern zu einem Mikrosteuerschalter (32, MC) hin von in einem Knotenpunkt eines Kommunikationsnetzes der seriellen Art empfangenen Nachrichten, wobei die Nachrichten an alle Knotenpunkte des Netzes übertragen werden und jeweils einen Identifizierungscode aufweisen, der den Inhalt der Nachricht anzeigt, wobei die Filtervorrichtung aufweist:
- Einrichtungen (50) zum Zuordnen eines Index (FMI) zu jedem Identifizierungscode (ID) aus einer Liste (48) von ldentifizierungscodes, welche Nachrichten entsprechen, die von dem Mikrosteuerschalter (32, MC) verarbeitet werden können, wobei diese Einrichtungen (50) einen Speicher (48, 50) aufweisen, der einerseits die Identifizierungscodes der Liste und andererseits einen Index (FMI) für jeden Identifizierungscode der Liste enthält,
- Einrichtungen (44, 46, 52) zum Zuordnen eines Index (FMI) zu der empfangenen Nachricht, wobei der Index als derjenige ausgewählt ist, der in dem Speicher (48, 50) dem Identifizierungscode (ID) zugeordnet ist, welcher dem Identifizierungscode der empfangenen Nachricht entspricht,
- Einrichtungen (70) zum Registrieren der empfangenen Nachricht und ihres zugeordneten Index (FMI) in einem Speicher (54) der Art FIFO,
- Einrichtungen (66) zum Zuordnen einer Adresse in einem Speicher (64) des Mikrosteuerschalters (32, MC) zu jedem Index (FMI), so dass jede empfangene Nachricht unter einer bestimmten Adresse des Speichers (64) des Mikrosteuerschalters (32, MC) registriert wird,
**dadurch gekennzeichnet, dass** der Speicher, welcher die Identifizierungscodes (ID) der Liste und die entsprechenden Indexe (FMI) enthält, ein programmierbarer Speicher ist.

2. Vorrichtung gemäß Anspruch 1, **dadurch gekennzeichnet, dass** die Einrichtungen (44, 46, 52) zum Zuordnen eines Index (FMI) zu der empfangenen Nachricht, wobei der Index als derjenige ausgewählt ist, der in dem Speicher (48, 50) dem Identifizierungscode (ID) zugeordnet ist, welcher dem Identifizierungscode der empfangenen Nachricht entspricht, aufweisen:
- einen Komparator (46) zum Vergleichen des Identifizierungscodes jeder Nachricht mit jedem der Identifizierungsrodes der Liste, die in dem Speicher (48) enthalten sind, und zum Liefern eines Signals im Falle der Gleichheit,
- eine Übertragungsschaltung (52), die von dem Gleichheitssignal gesteuert ist, um der empfangenen Nachricht den Index (FMI) zuzuordnen, welcher dem erkannten Identifizierungscode entspricht.

3. Vorrichtung gemäß Anspruch 1 oder 2, **dadurch gekennzeichnet, dass** die Einrichtungen zum Zuordnen einer Adresse in einem Speicher des Mikrosteuerschalters (32, MC) zu jedem Index einen programmierbaren Speicher (66) aufweisen, der durch den Index (FMI) adressierbar ist.

4. Verfahren zum Filtern zu einem Mikrosteuerschalter (32, MC) hin von in einem Knotenpunkt eines Kommunikationsnetzes der seriellen Art empfangenen Nachrichten, wobei die Nachrichten an alle Knotenpunkte des Netzes übertragen werden und jeweils einen Identifizierungscode aufweisen, der den Inhalt der Nachricht anzeigt, wobei das Filterverfahren die folgenden Schritte aufweist, die daraus bestehen:
a) eine Liste (48) der Identifizierungscodes (ID) zu erstellen, welche den Nachrichten entsprechen, die von dem Mikrosteuerschalter (32, MC) verarbeitet werden können,
b) jedem Identifizierungscode (ID) der Liste einen Index (FMI) zuzuordnen (55),
c) jeder Nachricht, welche einen Identifizierungscode der Liste aufweist, den Index (FMI) zuzuordnen (44), der ihm zugewiesen ist,
d) in einem Speicher (54) der Art FIFO jede empfangene Nachricht und ihren zugeordneten Index (FMI) zu registrieren,
e) jedem Index (FMI) eine Adresse in einem Speicher (64) des Mikrosteuerschalters (32, MC) zuzuordnen, und
f) jede Nachricht in dem Speicher (64) des Mikrosteuerschalters (32, MC) unter der Adresse zu registrieren, auf welche von dem in der Nachricht enthaltenen Index (FMI) hingewiesen wird,
**dadurch gekennzeichnet, dass** es einen folgenden Schritt aufweist, der daraus besteht:
g) die ldentifizierungscodes (ID) der Liste (48) und die entsprechenden Indexe (FMI) in einem programmierbaren Speicher zu registrieren.
